# EUROPEAN PATENT SPECIFICATION

(11) **EP 1 461 203 B1**
(45) Date of publication and mention of the grant of the patent: **25.04.2012**
(21) Application number: 03794574.8
(22) Date of filing: 04.09.2003
(51) Int. Cl.: B32B 5/26, A47L 13/10

(54) **CLEANING AND DUSTING FABRIC**
REINIGUNGS- UND STAUBTUCH
ETOFFE POUR NETTOYER ET EPOUSSETER

(30) Priority: 06.09.2002 US 408229 P
(43) Date of publication of application: 29.09.2004
(73) Proprietor: S. C. Johnson & Son, Inc., Racine, WI 53403 (US)
(72) Inventor: HARMAN, Rebecca, D., Oak Creek, WI 53154 (US); KLIMOWICZ, Randal, S., Caledonia, WI 53108 (US); BELAND, Rene, M., Waterford, WI 53185 (US)
(74) Representative: Ruschke, Hans Edvard
(86) International application number: PCT/US2003/027462
(87) International publication number: WO 2004/022331

(56) References cited:
- EP-A- 0 333 211
- EP-A- 0 814 189
- WO-A-02/43536
- WO-A-98/52458
- WO-A-99/00244
- US-A- 5 652 049
- DATABASE WPI Section Ch, Week 199330 Derwent Publications Ltd., London, GB; Class A18, AN 1993-237589 XP002268244 & JP 05 159511 A (MITSUBISHI RAYON CO LTD) 25 June 1993 (1993-06-25)
- DATABASE WPI Section Ch, Week 199408 Derwent Publications Ltd., London, GB; Class A94, AN 1994-062460 XP002268245 & JP 06 017356 A (KAO CORP) 25 January 1994 (1994-01-25)
- DATABASE WPI Section Ch, Week 199735 Derwent Publications Ltd., London, GB; Class A84, AN 1997-380270 XP002268246 & JP 09 164101 A (DAINIPPON JOCHUGIKU KK) 24 June 1997 (1997-06-24)

## Description

### FIELD OF THE INVENTION

This invention relates to a fabric for dusting and cleaning. In particular, the fabric of the invention may be used to pick up dust when the fabric is dry, and is absorbent so that the fabric can be used with a liquid solvent or polish or to clean up liquid spills.

### BACKGROUND OF THE INVENTION

Homes are dusty. Dust may come from any number of sources, such as shoe soles carrying dust from the yard or people and pets inhabiting the home. The air itself may hold dust produced by such disparate sources as factories and far-off volcanoes, and this dust may be carried by the air and brought into the home through open windows or HVAC systems. Having entered the home, the dust settles and leaves an unsightly and unsanitary film, if left unattended, on everything in the home.

Homes are also dirty. Dirt may come from beverages spilled on countertops, coffee tables or floors. The dirt may also come from pets and people tracking in dirt from outside the home, infants, dropped food such as potato chips, and any number of other sources.

To keep one's home clean in spite of the dust and dirt, the home must be almost constantly patrolled, dusted and cleaned. Producers realize the battle consumers face in keeping their homes clean, and have developed various fabrics that can be placed on mop heads, or shaped into mitts, to make dusting and cleaning as convenient a task as possible. These fabrics are in many instances disposable, so that a consumer can use the fabric, then dispose of the fabric.

There remains a need in the art for a fabric that is soft to the touch and picks up dust when dry, but is also absorbent so that the fabric can be used with a solvent or polish, or to clean up liquid spills.

### SUMMARY OF THE INVENTION

According to one aspect of the invention, a cleaning and dusting fabric comprises a first layer that includes 50 to 100 percent rayon by dry weight, the first layer having dust collection properties as well as liquid absorbency. A second layer includes a polymer spunbond that provides a structural base for the cleaning and dusting fabric that is soft yet resists tearing. The first layer and the second layer are hydroentangled. A third layer includes thermoplastic fibers having a melting temperature lower than that of each of the first and the second layers and the third layer is hydroentangled to at least one of the first layer and the second layer.

In another aspect of the invention, a cleaning and dusting mitt comprises a first layer comprising 50 to 100 percent rayon by weight and 0 to 25 percent polyester by weight, a second layer comprising a polypropylene spunbond, the second layer being hydroentangled to at least the first layer, and a third layer comprising fibers having a polyester core with a polyethylene sheath and a melting temperature lower than the first and the second layers, the third layer being hydroentangled to at least one of the first layer and the second layer. The first, second and third layers form a panel, the panel having a mitt shape such that corresponding panels can be superposed and a noncircumambient, heat-sealed seam formed along the edge of the panels to create an opening which permits entry of a human hand. The heat-sealed seam is formed by melting the third layer..

In yet another aspect of the invention, a method of manufacturing a cleaning and dusting fabric comprises the steps of providing a first layer comprising 50 to 100 percent rayon, providing a second layer comprising a polymer spunbond, providing a third layer comprising thermoplastic fibers having a melting temperature lower than that of each of the first and the second layers, feeding the first, second and third layers to a hydroentangling unit such that, as the first, second and third layers are fed, the first layer is disposed adjacent to one side of the second layer and the third layer is disposed adjacent to an opposite side of the second layer, and hydroentangling the first and third layers to at least the second layer to form the cleaning and dusting fabric.

In yet another aspect of the invention, the method of manufacturing a cleaning and dusting fabric comprises folding the cleaning and dusting fabric on itself, forming a noncircumambient heat seal along the edge of the cleaning and dusting fabric in the shape of a mitt, and cutting the cleaning and dusting fabric in the shape of a mitt such that an opening is formed along the non-heat-sealed edge that permits entry of a human hand.

### BRIEF DESCRIPTION OF THE DRAWINGS

Figure 1 shows a schematic cross-sectional view of an embodiment of the fabric according to the present invention;

Figure 2 shows an enlarged view of a segment of fiber according to an aspect of the present invention;

Figure 3 shows an apparatus for manufacturing the fabric of the present invention;

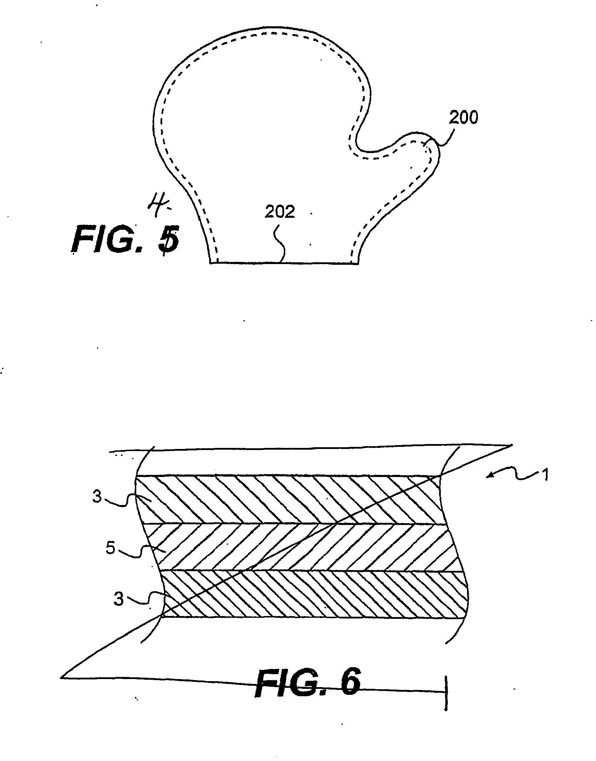

Figure 4 shows a top view of an end use of the fabric according to the present invention; and

### DETAILED DESCRIPTION OF THE PREFERRED EMBODIMENTS

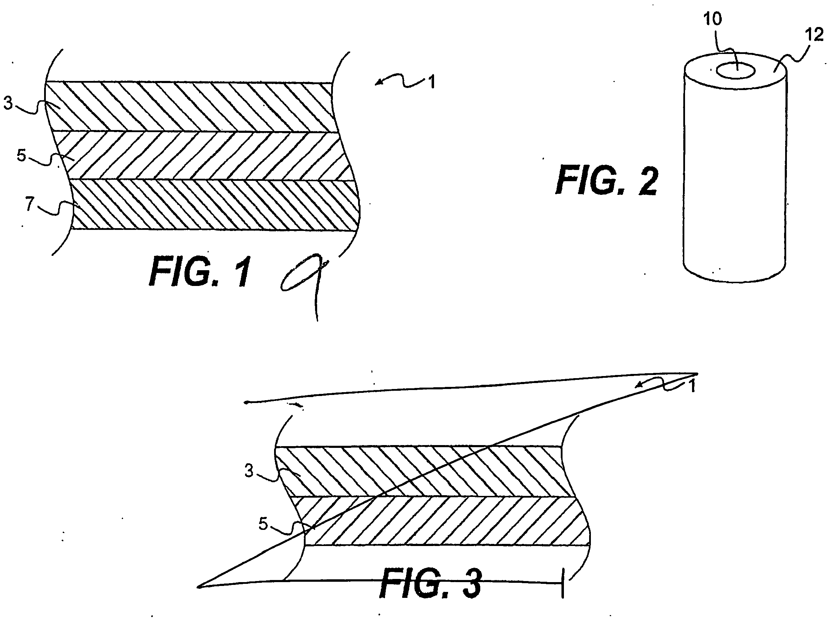

Figure 1 shows a three-layered fabric 1 that has excellent dust collection properties, and which is also absorbent. The fabric as shown in Figure 1 has the purpose of providing consumers a cleaning tool that both collects dust without any solvent or polish, and can also be used with liquid solvents or polishes or to clean up liquid spills. In addition, the fabric 1 is soft to the touch. Therefore, if the fabric 1 is formed into a mitt or other device designed to contact the skin, the fabric 1 will feel comfortable.

As shown in Figure 1, the first layer 3 comprises a blend of rayon fibers, which lend absorbency to the fabric 1, and polyester fibers. The rayon fiber content of the first layer 3 may be anywhere from 50 to 100 percent, 60 to 100 percent, 75 to 100 percent or 80 to 100 percent. (All references to the rayon fiber content are measured by dry weight.) Preferably, the rayon fiber content is about 100 percent. The rayon and the polyester fibers may be in the range of about 0.9 to about 1.5 deniers. Preferably, however, the rayon fiber is about 1.5 deniers, while the polyester fiber is about 0.9 deniers. (If the first layer is about 100 percent rayon, the rayon is nevertheless preferably about 1.5 denier.) Of course, other deniers may be used for either material, but it has been determined that about 1.5 denier rayon fibers provide excellent dust collection.

The basis weight of the first layer 3 is preferably about 30 g/m², but can be varied. Generally, the basis weight of the first layer 3 can be varied independently of the other layers in the fabric 1. However, varying the basis weight of the first layer 3 varies the basis weight of the fabric 1, because the basis weight of the fabric 1 is calculated by adding the basis weights of the three layers. Furthermore, the basis weight of the fabric 1 is 40 to 100 g/m², preferably 50 to 80 g/m², and most preferably about 65 g/m². Accordingly, the basis weight of the first layer 3 is preferably varied no more than is appropriate to maintain the basis weight of the fabric 1 within the above values.

The second layer 5 comprises a polymer spunbond, preferably a polypropylene spunbond. (A spunbond is a solid fiber fabric manufactured from a single strand, which is extruded onto a screen so that the fiber has a random orientation. The result is a solid, nonwoven fabric.) The second layer 5 provides structural stability and strength to the fabric 1, so that the fabric 1 will not pull apart or get snagged and rip when the fabric 1 is wiped across a surface. In addition, the second layer 5 is soft, without sharp or protruding edges. The benefit of having a polymer spunbond layer in a fabric is that, if the fabric 1 contacts a user's skin, the fabric 1 feels soft and comfortable. Other types of spunbond besides a polypropylene spunbond may be used, in which other resins, such as polyethylene, polyester, polyolefin or polyamide resins, may be substituted. A rayon spunbond may also be used.

This second layer 5 preferably has a basis weight of about 15 g/m², but the basis weight of the second layer 5 can be varied. As stated previously, however, the basis weight of the second layer 5 is preferably varied no more than is appropriate to maintain the basis weight of the fabric 1 as a whole within appropriate values.

The third layer 7 is preferably a bi-component layer comprising fibers having a polyester core 10 enveloped by a polyethylene sheath 12, as shown in Figure 2. The basis weight of the third layer 7 is preferably 20 g/m², which may be varied as previously discussed with respect to the first and second layers. Alternatively, instead of the polyethylene sheath 12, the third layer could be constructed with the polyester core 10 enveloped by a co-polyester sheath.

Preferably, the third layer 7 has a low melting temperature, relative to the other layers in the fabric 1. This low melting temperature facilitates heat sealing the fabric to itself or other material, which may be required in some finished products. For example, as discussed in more detail below, to produce a mitt for cleaning and dusting that conveniently fits over a user's hand, the fabric 1 is folded on itself and heat sealed in the shape of a mitt. The heat-sealing operation melts the third layers 7, which oppose each other because the fabric 1 has been folded upon itself. As a result of the melting, the opposed third layers 7 bond. Thus, a low-melting-temperature third layer 7 makes the heat sealing step possible. Once the folded fabric 1 is heat sealed, it is cut with a mitt-shaped die.

The fabric 1 comprising the above-described three layers preferably has a breaking strength of at least 500 g/30 mm, and more preferably at least 1000 g/30 mm.

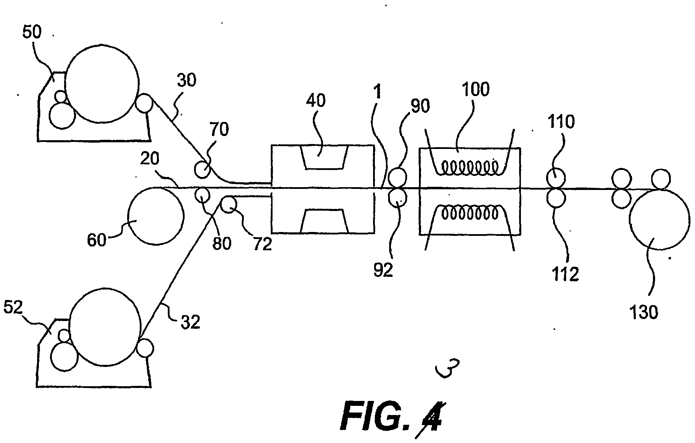

A preferred method of manufacturing the fabric 1 depicted in Figure 1 will now be discussed. Figure 3 is a schematic view showing an example of an apparatus for producing the fabric 1.

With the apparatus shown in Figure 3, a rayon/polyester fiber mat 30 and a bi-component fiber mat 32 are continuously delivered from carding machines 50, 52, via delivery rolls 70, 72. A feed roll 60 for a polypropylene spunbond 20 is located between the carding machines 50, 52. The polypropylene spunbond 20 is delivered from the feed roll 60 via a delivery roll 80.

The fiber mats 30, 32 are superposed upon the opposite sides of the polypropylene spunbond 20 at the point of the delivery rolls 70, 72, and the combination of the fiber mats 30, 32 and the polypropylene spunbond 20 is conveyed into a hydroentangling unit 40. In the hydroentangling unit 40, the fibers of the fiber mats 30, 32 are entangled with the polypropylene spunbond 20 by the action of a water jet. Also, the fiber mats 30, 32, which are located on opposite surfaces of the polypropylene spunbond 20, are entangled with each other. In this manner, a fabric 1 is prepared.

After the entanglement, the fabric 1 could be passed between nip rolls 90, 92, if a coating is desired to be placed on the fabric. Regardless, the fabric 1 is conveyed into a heating unit 100. In the heating unit 100, the fabric 1 is subjected to heat treatment for drying. The heat treatment does not subject the fabric 1 to a temperature sufficient to melt any of the layers. The fabric 1, after being subjected to the heat treatment, is passed between nip rolls 110, 112 and is wound into a finish roll 130. In this manner, the fabric 1, which has the structure shown in Figure 1, is obtained.

Once the fabric 1 is obtained, the fabric 1 may undergo additional processing for different products. For example, to create a mitt as shown in Figure 5, the fabric 1 may be unwound from the finish roll 130, folded, heat sealed to itself along seam 200, and cut in the shape of a mitt with a mitt-shaped die. Naturally, the seam 200 is mitt-shaped and is noncircumambient so that it does not seal the bottom of the mitt. The unsealed portion creates an opening 202. The opening 202 permits a user to insert the user's hand.

Other shapes, sizes and uses are also contemplated for the fabric 1. For example, the fabric 1 may be cut into rectangular sections. The rectangular sections, called a cloth, may be placed by a consumer on the end of a mop or sweeper for the purpose of dusting and cleaning floors.

Many different embodiments of the present invention may be constructed without departing from the spirit and scope of the present invention. It should be understood that the present invention is not limited to the specific embodiments described in this specification. To the contrary, the present invention is intended to cover various modifications and equivalent arrangements included within the spirit and scope of the invention as hereafter claimed. The scope of the following claims is to be accorded the broadest interpretation so as to encompass all such modifications, equivalent structures and functions.

### INDUSTRIAL APPLICABILITY

The fabric as claimed herein has the purpose of providing consumers a cleaning tool that both collects dust without any solvent or polish, and can also be used with liquid solvents or polishes or to clean up liquid spills. In addition, a method is claimed for manufacturing such a fabric.

## Claims

1. A cleaning and dusting fabric (1), adapted for dry dusting or absorbing liquids, comprising:
a first layer (3) comprising 50 to 100 percent rayon fibers by dry weight which lend absorbency to the fabric, said rayon fibers being about 1,5 deniers such that dust collection properties are provided; and
a second layer (5) providing a structural base for said cleaning and dusting fabric and comprising a polymer spunbond which is soft yet provides structural stability and strength to the fabric, said first layer and said second layer being hydroentangled;
**characterized by**
a third layer (7) comprising thermoplastic fibers having a melting temperature lower than that of each of said first and said second layers, said third layer being hydroentangled to at least one of said first layer and said second layer.

2. A cleaning and dusting fabric according to claim 1, wherein said polymer spunbond is polypropylene spunbond.

3. A cleaning and dusting fabric according to claim 1, wherein said first layer (3) comprises 75 to 100 percent rayon by weight.

4. A cleaning and dusting fabric according to claim 1, wherein said first layer (3) comprises 80 percent rayon by weight.

5. A cleaning and dusting fabric according to claim 1, wherein said third layer (7) comprises fibers comprising a polyester core enveloped by a polyethylene sheath.

6. A cleaning and dusting fabric according to claim 1, wherein said cleaning and dusting fabric (1) has a basis weight within the range of 40g/m² to 100g/m².

7. A cleaning and dusting fabric according to claim 1, wherein said first (3) and third (7) layers are disposed on opposite sides of said second layer (5).

8. A cleaning and dusting fabric according to claim 1, wherein said third layer (7) comprises at least one of polyester fibers and polyethylene fibers.

9. A cleaning and dusting fabric according to claim 1, said first layer (3) further comprising polyester.

10. A cleaning and dusting mitt comprising:
a first layer (3) comprising 50 to 100 percent rayon by weight and 0 to 25 percent polyester by weight;
a second layer (5) comprising a polypropylene spunbond, said second layer being hydroentangled to at least said first layer;
**characterized by**
a third layer (7) comprising fibers having a polyester core with a polyethylene sheath and a melting temperature lower than said first and said second layers, said third layer being hydroentangled to at least one of said first layer and said second layer,
said first, second and third layers forming a panel, the panel having a mitt shape such that corresponding panels can be superposed and a noncircumambient, heat-sealed seam f(200) ormed along the edge of the panels to create an opening (202) which permits entry of a human hand, wherein the heat-sealed seam is formed by melting said third layer.

11. A method of manufacturing a cleaning and dusting fabric (1) comprising the steps of :
providing a first layer (3) comprising 50 to 100 percent rayon;
providing a second layer (5) comprising a polymer spunbond;
**characterized by**
providing a third layer (7) comprising thermoplastic fibers having a melting temperature lower than that of each of the first and the second layers;
feeding the first, second and third layers to a hydroentangling unit such that, as the first, second and third layers are fed, the first layer is disposed adjacent to one side of the second layer and the third layer is disposed adjacent to an opposite side of the second layer; and
hydroentangling the first and third layers to at least the second layer to form the cleaning and dusting fabric.

12. A method of manufacturing according to claim 11, further comprising drying the cleaning and dusting fabric (1) after said step of hydroentangling.

13. A method of manufacturing according to claim 12, further comprising:
folding the cleaning and dusting fabric (1) on itself;
forming a noncircumambient heat seal (200) along the edge of the cleaning and dusting fabric in the shape of a mitt; and
cutting the cleaning and dusting fabric in the shape of a mitt such that an opening (202) is formed along the non-heat-sealed edge that permits entry of a human hand.

## Patentansprüche

1. Reinigungs- und Staubwischstoff (1) zum trocknen Staubwischen oder Aufnehmen von Flüssigkeiten mit:
einer ersten Schicht (3) mit 50 Gew.-% bis 100 (Trocken-) Gew.-% RayonFasern, die dem Stoff Absorptionsfähigkeit erteilen und eine Fadenstärke von etwa 1,5 den aufweisen derart, dass sich Staubaufnahmeeigenschaften ergeben; und
einer zweiten Schicht (5) als Strukturgrundlage für den Reinigungs- und Staubwischstoff, die ein Polymerisat-Spinnvlies aufweist, das weich ist, aber dem Stoff strukturelle Stabilität und Festigkeit erteilt, wobei die erste und die zweite Schicht wasserstrahlgenadelt sind;
**gekennzeichnet durch**
eine dritte Schicht (7) mit thermoplastischen Fasern mit einem Schmelzpunkt, der niedriger ist als jeder der ersten und der zweiten Schicht, wobei die dritte Schicht mit mindestens entweder der ersten oder der zweiten Schicht wasserstrahlgenadelt ist.

2. Reinigungs- und Staubwischstoff nach Anspruch 1, bei dem das Polymerisat-Spinnvlies ein Polypropylen-Spinnvlies ist.

3. Reinigungs- und Staubwischstoff nach Anspruch 1, dessen erste Schicht (3) 75 Gew.-% bis 100 Gew.-% Rayon aufweist.

4. Reinigungs- und Staubwischstoff nach Anspruch 1, dessen erste Schicht (3) 80 Gew.-% Rayon aufweist.

5. Reinigungs- und Staubwischstoff nach Anspruch 1, dessen dritte Schicht (7) Fasern mit einem Polyester-Kern aufweist, der von einer Polyethylen-Hülle umgeben ist.

6. Reinigungs- und Staubwischstoff (1) nach Anspruch 1 mit einem Basisgewicht im Bereich von 40 g/m² bis 100 g/m².

7. Reinigungs- und Staubwischstoff nach Anspruch 1, dessen erste und dritte Schicht (3, 7) auf entgegengesetzten Seiten der zweiten Schicht (5) angeordnet sind.

8. Reinigungs- und Staubwischstoff nach Anspruch 1, dessen dritte Schicht (7) mindestens entweder Polyester- oder Polyethylen-Fasern oder beide aufweist.

9. Reinigungs- und Staubwischstoff nach Anspruch 1, dessen erste Schicht (3) weiterhin Polyester aufweist.

10. Reinigungs- und Staubwisch-Fäustling mit:
einer ersten Schicht (3) mit 50 bis 100 Gew.-% Rayon und 0 bis 25 Gew.-% Polyester; und
einer zweiten Schicht (5) mit einem Polypropylen-Spinnvlies, die mit mindestens der ersten Schicht wasserstrahlvernadelt ist;
**gekennzeichnet durch**
eine dritte Schicht (7) mit Fasern, die einen Polyester-Kern mit einer Polyethylen-Umhüllung aufweisen und deren Schmelzpunkt niedriger ist als die der ersten und der zweiten Schicht, wobei die dritte Schicht mit mindestens entweder der ersten oder der zweiten Schicht oder beiden wasserstrahlgenadelt ist;
wobei die erste, zweite und dritte Schicht jeweils ein Flachmaterial in der Gestalt eines Fäustlings bilden derart, dass entsprechende Materialflächen aufeinandergelegt und mit einer entlang der Flächenkanten, aber nicht vollständig um diese herum laufenden Schweißnaht (200) versehen werden können, die das Einführen einer menschlichen Hand ermöglicht, wobei die Schweißnaht **durch** Schmelzen der dritten Schicht gebildet wird.

11. Verfahren zum Herstellen eines Reinigungs- und Staubwischstoffs (1) mit folgenden Schritten:
Bereitstellen einer ersten Schicht (3) mit 50 bis 100 Prozent Rayon; und
Bereitstellen einer zweiten Schicht (5) mit einem Polymerisat-Spinnvlies;
**gekennzeichnet durch**:
Bereitstellen einer dritten Schicht (7) mit thermoplastischen Fasern, deren Schmelzpunkt niedriger liegt als der der ersten und der zweiten Schicht;
Einführen der ersten, zweiten und dritten Schicht in eine Wasserstrahl-Nadelungseinheit derart, dass dabei die erste Schicht auf einer und die dritte Schicht auf einer entgegengesetzten Seite der zweiten Schicht liegen; und
Wasserstrahlnadeln der ersten und der dritten mit mindestens der zweiten Schicht, um den Reinigungs- und Staubwischstoff auszubilden.

12. Herstellungsverfahren nach Anspruch 11, bei man weiterhin den Reinigungs- und Staubwischstoff (1) nach dem Wasserstrahlnadeln trocknet.

13. Herstellungsverfahren nach Anspruch 12, bei dem man weiterhin:
den Reinigungs- und Staubwischstoff (1) auf sich selbst umfaltet;
entlang der Kante des Reinigungs- und Staubwischstoffs in der Gestalt eines Fäustlings eine nicht vollständig umlaufende Schweißnaht (200) ausbildet; und
den Reinigungs- und Staubwischstoff in der Fäustlingsgestalt so ausschneidet, dass der nicht verschweißte Kantenteil eine Öffnung (202) bildet, die das Einführen einer menschlichen Hand erlaubt.

## Revendications

1. Textile pour nettoyer et épousseter (1), adapté pour épousseter à sec ou absorber des liquides, comprenant :
une première couche (3) comprenant de 50 à 100 pourcent de fibres de rayonne par masse sèche qui communique une absorbance au textile, lesdites fibres de rayonne étant d'environ 1,5 deniers de sorte que des propriétés de recueil de poussière sont fournies ; et
une seconde couche (5) fournissant une base structurelle pour ledit textile pour nettoyer et épousseter et comprenant un polymère filé-lié qui est souple fournit néanmoins une stabilité structurelle et une résistance au textile, ladite première couche et ladite seconde couche étant hydroemmêlées ;
**caractérisé par**
une troisième couche (7) comprenant des fibres thermoplastiques ayant une température de fusion inférieure à celle de chacune de ladite première et de ladite seconde couches, ladite troisième couche étant hydroemmêlée à au moins une de ladite première couche et de ladite seconde couche.

2. Textile pour nettoyer et épousseter selon la revendication 1, dans lequel ledit polymère filé-lié est du polypropylène filé-lié.

3. Textile pour nettoyer et épousseter selon la revendication 1, dans lequel ladite première couche (3) comprend de 75 à 100 % de rayonne en masse.

4. Textile pour nettoyer et épousseter selon la revendication 1, dans lequel ladite première couche (3) comprend 80 % de rayonne en masse.

5. Textile pour nettoyer et épousseter selon la revendication 1, dans lequel ladite troisième couche (7) comprend des fibres comprenant un noyau de polyester enveloppé par une enveloppe de polyéthylène.

6. Textile pour nettoyer et épousseter selon la revendication 1, dans lequel ledit textile pour nettoyer et épousseter (1) présente une masse de base dans l'intervalle de 40 g/m² à 100g/m².

7. Textile pour nettoyer et épousseter selon la revendication 1, dans lequel lesdites première (3) et troisième (7) couches sont disposées sur des côtés opposés de ladite seconde couche (5).

8. Textile pour nettoyer et épousseter selon la revendication 1, dans lequel ladite troisième couche (7) comprend au moins une de fibres de polyester et de fibres de polyéthylène.

9. Textile pour nettoyer et épousseter selon la revendication 1, ladite première couche (3) comprenant de plus du polyester.

10. Moufle pour nettoyer et épousseter comprenant :
une première couche (3) comprenant de 50 à 100 % en masse de rayonne et de 0 à 25 % en masse de polyester ;
une seconde couche (5) comprenant un polypropylène filé-lié, ladite seconde couche étant hydroemmêlée à au moins ladite première couche ;
**caractérisée par**
une troisième couche (7) comprenant des fibres présentant un noyau de polyester avec une enveloppe de polyéthylène et une température de fusion inférieure à ladite première et à ladite seconde couches, ladite troisième couche étant hydroemmêlée à au moins une de ladite première couche et de ladite seconde couche,
lesdites première, seconde et troisième couches formant un panneau, le panneau ayant une forme de moufle telle que des panneaux correspondants peuvent être superposés et une couture thermoscellée ne faisant pas tout le pourtour (200) est formée le long du bord des panneaux pour créer une ouverture (202) qui permet l'entrée d'une main d'un être humain, dans laquelle la couture thermoscellée est formée par fusion de ladite troisième couche.

11. Procédé de fabrication d'un textile pour nettoyer et épousseter (1) comprenant les étapes consistant :
à fournir une première couche (3) comprenant de 50 à 100 % de rayonne ;
à fournir une seconde couche (5) comprenant un polymère filé-lié ;
**caractérisé par**
la fourniture d'une troisième couche (7) comprenant des fibres thermoplastiques ayant une température de fusion inférieure à celle de chacune des première et seconde couches ;
à introduire les première, seconde et troisième couches dans une unité d'hydroemmêlement de sorte que lorsque les première, seconde et troisième couches sont introduites, la première couche est disposée à côté d'un côté de la seconde couche et la troisième couche est disposée à côté d'un côté opposé de la seconde couche ; et
à hydroemmêler les première et troisième couches à au moins la seconde couche pour former le textile pour nettoyer et épousseter.

12. Procédé de fabrication selon la revendication 11, comprenant de plus le séchage du textile pour nettoyer et épousseter (1) après ladite étape d'hydroemmêlement.

13. Procédé de fabrication selon la revendication 12, comprenant de plus :
le pliage du textile pour nettoyer et épousseter (1) sur lui-même;
la formation d'un thermoscellement ne faisant pas tout le pourtour (200) le long du bord du tissu pour nettoyer et épousseter dans la forme d'une moufle ; et
la découpe du tissu pour nettoyer et épousseter dans la forme d'une moufle de sorte qu'une ouverture (202) est formée le long du bord non thermoscellé qui permet l'entrée d'une main d'un être humain.
